# EUROPEAN PATENT SPECIFICATION

(11) **EP 1 020 738 B1**
(45) Date of publication and mention of the grant of the patent: **27.02.2008**
(21) Application number: 00300199.7
(22) Date of filing: 12.01.2000
(51) Int. Cl.: G02B 1/11

(54) **Display device with anti-reflection film**
Anzeigevorrichtung mit Antireflektionsfilm
Dispositif d' affichage avec revêtement antiréfléchissant

(30) Priority: 14.01.1999 JP 756099; 19.10.1999 JP 29649299
(43) Date of publication of application: 19.07.2000
(73) Proprietor: Sumitomo Chemical Company, Limited, Tokyo 104-8260 (JP)
(72) Inventor: Kurata, Nobuyuki, Habikino-shi, Osaka (JP); Hishinuma, Takahiro, Chiba-shi, Chiba (JP); Shimizu, Akiko, Ibaraki-shi, Osaka (JP); Hattori, Tetsuji, Ibaraki-shi, Osaka (JP)
(74) Representative: Cresswell, Thomas Anthony

(56) References cited:
- EP-A- 0 667 541
- EP-A- 0 730 168
- WO-A-97/08357
- US-A- 5 770 306
- PATENT ABSTRACTS OF JAPAN vol. 1999, no. 02, 26 February 1999 (1999-02-26) & JP 10 300902 A (DAINIPPON PRINTING CO LTD), 13 November 1998 (1998-11-13)
- PATENT ABSTRACTS OF JAPAN vol. 017, no. 586 (P-1633), 26 October 1993 (1993-10-26) & JP 05 173001 A (NIPPON HIKYUMEN LENS KK), 13 July 1993 (1993-07-13)

## Description

### BACKGROUND OF THE INVENTION

### 1. Field of the Invention

The present invention relates to a display device comprising an anti-reflection film.

### 2. Description of the Related Art

Heretofore, many display devices, such as a cathode-rays tube(CRT), a liquid crystal display device, a plasma display panel(PDP), an organic electroluminescence(EL) device and an inorganic EL display device, has been used under environment, both indoor and outdoor, where outdoor light comes onto a screen of a display device. There has been a problem that incident rays are reflected on the surface, so that images in the screen becomes difficult to be seen.

As a solution to this problem, an anti-reflection film has been disposed on a screen of a display device to improve image quality.

For example, Japanese Patent Application Laid-Open No. Hei 5-173001 discloses an anti-reflection film in which a first layer having a refractive index of 1.63 to 1.75 which is formed of CeO₂ and MgO, a second layer which is formed of TiO₂ and TiO, and a third layer which is formed of MgF₂ or SiO₂ are laminated in order.

Japanese Patent Application Laid-Open No. Hei 10-300902 discloses an anti-reflection film composed of three layers whose refractive indexes are selected from the range of 1.40 to 2.20.

However, the anti-reflection film disclosed in Japanese Patent Application Laid-Open No. Hei 5-173001 can exhibit an anti-reflection effect only in a narrow wavelength range and the effect is not satisfactory. On the other hand, the anti-reflection film disclosed in Japanese Patent Application Laid-Open No. Hei 10-300902 can exhibit an anti-reflection effect in a relatively wide wavelength range. However, a first layer of this anti-reflection film has a fine undulatory surface. In general, anti-reflection effect as high as shown in the examples can not be exhibited when a fine undulatory surface is not formed. In addition, even though a fine undulatory surface is formed, the anti-reflection effect at a wavelength of about 550 nm, which exerts influence upon visibility most strongly, has not been satisfactory.

GB-A-1 591 064 discloses an optical element having reduced undesired reflectance. The element is formed of a transparent synthetic polymer coated successively with layers of silicon suboxide, and a silicon dioxide outer layer. The element may comprise a layer of titanium dioxide between the layers of silicon suboxide and silicon dioxide.

EP-A-515 847 discloses a glass pane with a reflectance reducing coating such as an automobile windshield. The pane is coated with a two-layer coating, comprising a first mixed oxide film layer, e.g. TiO₂-SiO₂, and a second outer oxide film layer.

In other words, no anti-reflection film which can exhibit sufficient anti-reflection effect throughout the wavelength range of the visible rays has not yet been known.

Under these circumstances, the present inventors have intensively studied to develop an anti-reflection film having low reflectivity in a wide wavelength range. As a result, they have found that an effective anti-reflection effect throughout the wavelength range of the visible rays can be attained by making up an anti-reflection film comprising a transparent substrate, a first layer having a refractive index of 1.70 to 1.80 and an optical thickness of 0.21 λ to 0.29 λ, and comprising a mixture of oxides or a compound oxide of at least one kind of element selected from Si, Al, and W and at least one kind of element selected from Bi, Mo, Ta, Zn, Ti, Nb, In, Zr and Sn, a second layer having a refractive index of not less than 2.20 and an optical thickness of 0.41 λ to 0.54 λ, and comprising an oxide of at least one kind of element selected from Ti and Nb, and a third layer having a refractive index of 1.44 to 1.49 and an optical thickness of 0.22 λ to 0.27 λ, and comprising an oxide of Si, wherein the first layer, the second layer and the third layer are laminated on a surface of the transparent substrate in this order from the transparent substrate side toward the air layer side.

### SUMMARY OF THE INVENTION

That is, the present invention provides a display device comprising an anti-reflection film (7) comprising a transparent substrate (5), a first layer (1), a second layer (2) and a third layer (3),
the first layer (1) having a refractive index of 1.70 to 1.80 and an optical thickness of 0.21 λ to 0.29 λ, and comprising a mixture of oxides or a compound oxide of at least one kind of element selected from Si, Al and W and at least one kind of element selected from Bi, Mo, Ta, Zn, Ti, Nb, In, Zr and Sn,
the second layer (2) having a refractive index of not less than 2.20 and an optical thickness of 0.41 λ to 0.54 λ, and comprising an oxide of at least one kind of element selected from Ti and Nb, and
the third layer (3) having a refractive index of 1.44 to 1.49 and an optical thickness of 0.22 λ to 0.27 λ, and comprising an oxide of Si,
wherein the first layer (1), the second layer (2) and the third layer (3) are laminated on a surface of the transparent substrate (5) in this order from the transparent substrate side toward the air layer side (6), and λ is equal to 550 nm.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and accompanying drawings which are given by way of illustration only, and thus are not limitative of the present invention and wherein;
Fig. 1 is a schematic view which illustrates a cross section of the anti-reflection film of the present invention.
Fig. 2 illustrates the reflection spectrum of the surface of the anti-reflection substrate of the anti-reflection film which is obtained in Example 1.
Fig. 3 illustrates the reflection spectrum of the surface of the anti-reflection substrate of the anti-reflection film which was obtained in Example 2.
Fig. 4 illustrates the reflection spectrum of the surface of the anti-reflection substrate of the anti-reflection film which was obtained in Example 3.
Fig. 5 illustrates the reflection spectrum of the surface of the anti-reflection substrate of the anti-reflection film which is obtained in Comparative Example 1.
Fig. 6 illustrates the reflection spectrum of the surface of the anti-reflection substrate of the anti-reflection film which is obtained in Comparative Example 2.

### DETAILED DESCRIPTION OF THE PREFERRED EMBODIMENTS

The present invention will be explained in detail below.

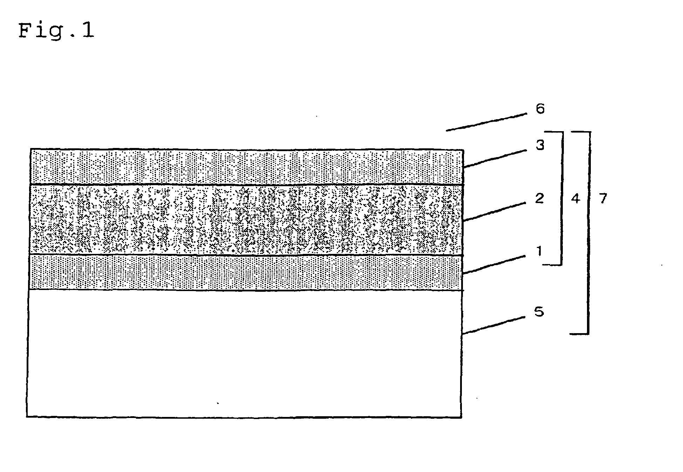

Fig. 1 is a schematic cross section of the anti-reflection films of the present invention.

In an anti-reflection film (7) used in the present invention, on a surface of a transparent substrate (5), is formed an anti-reflection substrate (4) in which a first layer (1), a second layer (2) and a third layer (3) are laminated in this order from the transparent substrate side toward the air layer side (6).

The transparent substrate (5) used for the anti-reflection film may have a flat form such as a plate form, a film form and a sheet form, or may be one having a curved surface such as a lens.

As such a transparent substrate, known transparent polymer films or sheets, inorganic transparent substrates can be used. Concrete examples thereof include films and sheets of transparent polymers such as cellulose polymers (e.g., polymer of diacetylcellulose, triacetylcellulose (TAC), propionylcellulose, butyrylcellulose, acetylpropionylcellulose, nitrocellulose and acetatebutylatecellulose), polycarbonate polymers, polyarylate polymers, polyester polymers (e.g., polyethylene terephthalate (PET), polyethylenenaphthalate, polybutyleneterephthalate, poly-1,4-cyclohexanedimethyleneterephthalate and polyethylene-1,2-diphenoxyethane-4,4'-dicarboxylate), acrylic polymers (e.g., polymethylmethacrylate and poly(meth)acrylonitrile), functional norbornene polymers (e.g., ARTON^{®} manufactured by JSR Co.,Ltd.) polyolefin polymers (e.g., polyethylene, polypropylene, polymethylpentene, amorphous polyolefins and ZEONEX^{®} manufactured by Nippon Zeon Co.,Ltd.), polyurethane polymers, polyamide polymers (e.g., aromatic polyamides)., polysulfone, polyethersulfone, polyetherketone, polyetherimide, polyimide, polystyrene, polyoxyethylene, polyether films, polyvinyl alcohol, fluoro polymers (e.g., poly-4-fluoroethylene and polyvinylfluoride), polyvinylchloride and polyvinylacetal, and inorganic transparent substrates such as quartz glass, alkaline glass and sapphire. In addition, plastic lens, glass lens and the like also can be used as a substrate. A refractive index of the transparent substrate to be used preferably is, but is not particularly limited to, 1.48 to 1.60. Polarizing films, optical filters for display devices such as CRTs and optical components such as touch panels may be used as the transparent substrate.

The transparent substrate may have an intermediate layer on its surface in order to improve adhesion with the first layer (1) or to improve its hardness. The intermediate layer may be a polymer film formed of a polymer such as acrylic resin, urethane resin, silicon resin, cardo resin and polysilazane. In addition, the layers formed of SiOₓ, Al₂O₃ or the like and layers formed of Cr, which have the thickness of about 3 nm (30 Å) to 20 nm (200 Å), may be employed.

The transparent substrate may be provided with a fine undulation on its surface to be invested with anti-glaring property. For the transparent substrate to be invested with the anti-glaring property, the substrate may be provided with a resin layer in which silica gel, resin beads, glass beads or the like are dispersed, or may be subjected to etching, matting or the like to its surface.

The transparent substrate may be subjected to surface treatment to its surface in order, for example, to be invested with adhesion. Examples of such surface treatment include heating in vacuum, corona treatment, ion-bombardment, plasma treatment, ultraviolet irradiation, electron beam irradiation and the like.

A refractive index of the first layer (1) is about 1.70 to 1.80, preferably is about 1.72 to 1.80, and more preferably is about 1.73 to 1.78. The refractive index is a value determined at a wavelength of 632.8 nm. In the following description, that term has the same meaning as mentioned above.

The first layer usually has a transmittance in the visible rays range of not less than 80%.

The first layer is a layer formed of an inorganic dielectric. The inorganic dielectric is an oxide comprising both an element capable of providing a low-refractive-index material and an element capable of providing a high-refractive-index material, and concretely is a mixture of a low-refractive-index material and a high-refractive-index material, or a compound oxide of both an element capable of providing a low-refractive-index material and an element capable of providing a high-refractive-index material.

The element capable of providing a low-refractive-index material is Si, Al or W, which may be of one kind or of two or more kinds. The element capable of providing a high-refractive-index material is Bi, Mo, Ta, Zn, Ti, Nb, In, Zr or Sn, which may be of one kind or of two or more kinds. Examples of such a low-refractive-index material include oxides such as SiO₂, Al₂O₃ and WO₃. Examples of such a high-refractive-index material include oxides such as TiO₂, Nb₂O₅ and Ta₂O₅. Preferred mixtures of a low-refractive-index material and a high-refractive-index material include a mixture of SiO₂ and Nb₂O₅, a mixture of Al₂O₃ and Nb₂O₅, a mixture of Al₂O₃ and TiO₂, a mixture of SiO₂ and TiO₂, and the like. The low-refractive-index material and the high-refractive-index material may be either crystalline or amorphous. Appropriate selection of a ratio of amounts of a low-refractive-index material and a high-refractive-index material can attain a desired refractive index.

A compound oxide of both an element capable of providing a low-refractive-index material and an element capable of providing a high-refractive-index material may, for example, be compound oxides of Si and/or Al and Ti and/or Nb, concretely a compound oxide of Si and Nb, a compound oxide of Al and Nb, a compound oxide of Al and Ti, a compound oxide of Si and Ti, and the like. These compound oxides may be either crystalline or amorphous. Appropriate selection of a ratio of the numbers of atoms of elements capable of providing a low-refractive-index material and elements capable of providing a high-refractive-index material can attain a desired refractive index.

The first layer has an optical thickness of about 0.21 λ to 0.29 λ, preferably about 0.22 λ to 0.28 λ, and more preferably about 0.23 λ to 0.27 λ. λ used herein is a preset wavelength. When it is used for display devices such as liquid crystal display devices, it is arbitrarily set in the wavelength range of the visible rays, and it is usually set to 550 nm. In the following description, that term has the same meaning as mentioned above.

The optical thickness of a layer is the product of the layer thickness and the refractive index.

A thickness of the first layer usually is in the range of about 60 nm to 95 nm.

The second layer (2) has a refractive index of not less than about 2.20, preferably not less than 2.25.

A transmittance of the second layer in the visible rays range is usually not less than 80%.

The second layer is a layer formed of an inorganic dielectric. It comprises an oxide of at least one kind of element selected from Ti and Nb and preferably is a layer composed mainly of Nb oxide and Ti oxide from the viewpoints of a material cost and a deposition rate.

The second layer has an optical thickness of about 0.41 λ to 0.54 λ, preferably about 0.43 λ to 0.53 λ, more preferably about 0.45 λ to 0.52 λ.

A thickness of the second layer usually is in the range of about 90 nm to 125 nm.

The third layer (3) has a refractive index of about 1.44 to 1.49.

A transmittance of the third layer in the visible rays range is usually not less than 80%.

The third layer is a layer formed of an inorganic dielectric. It comprises an oxide of Si and preferably is a layer composed mainly of Si oxide from the viewpoints of surface hardness and ease of investing water and oil repellency.

The third layer has an optical thickness of about 0.22 λ to 0.27 λ, preferably about 0.23 λ to 0.26 λ.

A thickness of the third layer is usually in the range of about 80 nm to 100 nm.

The first, second and third layers can be disposed on the transparent substrate by known methods including physical vapor deposition (PVD) methods such as the electron beam evaporation method, the induction heating evaporation method, the resistance heating evaporation method, the ion plating method and the sputtering method, the plasma chemical vapor deposition (CVD) method, and a coating method in which an alkoxide solution or the like is applied. A layer formed of a mixture can be formed on the transparent substrate by a dual-source evaporation method in which at least two kinds of evaporating materials are evaporated from separate evaporation sources and a mixed coating is formed, a vacuum evaporation method or sputtering method using a mixed material of two kinds of inorganic dielectric, or the like.

Alternatively, the layer formed of a mixture can also be formed on the surface of the transparent substrate by a sputtering method using an alloy target of two kinds of metals. In concrete examples of forming the first layer, it can be formed by a sputtering method using a sputtering target containing at least one element selected from Si, Al, W and the like and at least one element selected from Bi, Mo, Ta, Zn, Ti, Nb, In, Zr, Sn and the like. The sputtering target may be either an alloy target or an oxide target, but the alloy target is preferred because the first layer can be formed by DC magnetron sputtering.

In the case of using, as a sputtering target, an alloy target containing Si and Ti, a ratio of the number of Si atom to the sum of the numbers of Si atom and Ti atom in the alloy target, which is represented as Si/(Si+Ti), is usually in the range of from 0.41 to 0.55.

This anti-reflection film may be disposed on either one side or both sides of the transparent substrate.

A smudge resistant coating layer may be formed on the anti-reflection film as necessary.

As a machine for producing the first, second and third layers, for example, a batch or in-line production machine can be employed in the case where the transparent substrate is in the form of a plate, sheet or lens. When the transparent substrate is in the form of a film, a winding-up vacuum film forming machine can also be used.

The anti-reflection film can be attached to polarizing films, retardation films, touch panels, optical filters, VDT filters, PDP front panels, projection television front panels, projection television, etc., CRTs (direct mounting to CRTs, film laminating, etc.), organic EL and inorganic EL display devices (film laminating, direct mounting to substrates, etc.), and the like. Like ordinary polarizing films, the transparent substrate with the anti-reflection film can be used for liquid crystal display devices when the substrate is a polarizing film. When the transparent substrate is an optical filter or a touch panel, the transparent substrate with the anti-reflection film can be attached to the front of a variety of display devices such as CRTs, PDPs, liquid crystal displays, and organic EL and inorganic EL display devices.

A method for placing the anti-reflection film on a polarizing film, optical filter, touch panel and the like may be one in which a transparent substrate on which an anti-reflection film has been formed is laminated onto the polarizing film, optical filter, touch panel or the like with disposing an adhesive layer as well as one in which the anti-reflection substrate (first layer, second layer and third layer) is formed directly on the polarizing film, optical filter, touch panel or the like.

The anti-reflection film of the present invention can exhibit an excellent anti-reflection effect throughout the visible rays range, and can be produced at low cost.

### EXAMPLES

The present invention will be further illustrated in detail with the following examples, but the invention is not limited to the examples.

As mentioned above, a refractive index is a value detected at a wavelength of 632.8 nm.

### Example 1

Using, as a transparent substrate (5), a transparent polymer film composed of a triacetylcellulose film (the commercial name: FUJITAC SH-80; manufactured by Fuji Photo Film Co., Ltd.) and an about 5 µm thick acrylic resin coating formed on the triacetylcellulose film, an anti-reflection film (7) is produced by forming an anti-reflection substrate (4) obtained by forming successively, on the substrate (5), a first layer (1) of 83% of Al₂O₃ and 17% of TiO₂ [a refractive index: 1.74; a thickness: 76 nm (760 Å)], a second layer (2) of Nb₂O₅ [a refractive index: 2.34; a thickness: 113 nm (1130 Å)], and a third layer (3) of SiO₂ [a refractive index: 1.47; a thickness: 90 nm (900 Å)].

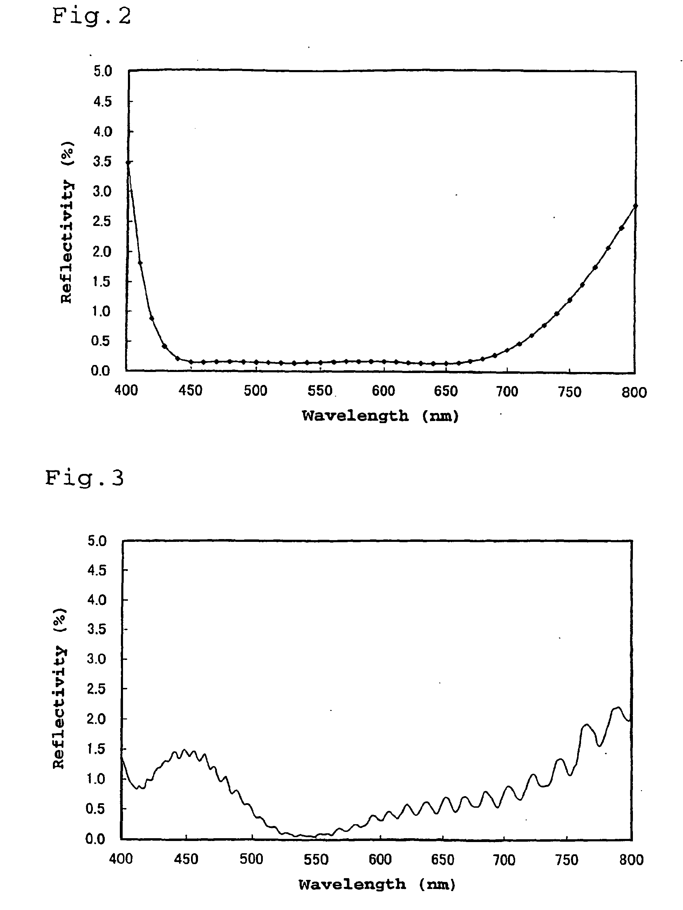

Fig. 2 illustrates the reflection spectrum of the surface of the anti-reflection substrate of the anti-reflection film (7).

### Example 2

Using a sputtering machine manufactured by Tokuda Co.,Ltd.(the model CFS-8EP-55), a transparent polymer film, which was used as a transparent substrate (5), was prepared by forming an about 5 µm thick acrylic resin layer on a triacetylcellulose film (the commercial name: FUJITAC SH-80; manufactured by Fuji Photo Film Co., Ltd.). On the transparent substrate was formed a first layer (1) by the DC magnetron sputtering method under a 640-W condition using an alloy target composed of Si and Ti which had an atomic ratio, represented by Si/(Si+Ti), of 0.48 and introducing a mixed gas of argon and oxygen (the oxygen concentration was 2 parts by volume based on 100 parts by volume of the mixed gas) with adjusting a pressure in the system at the time of forming the layer to 0.666 Pa (5 × 10⁻³ Torr). In forming the first layer, an Si substrate having a mirror polished surface was placed together with the transparent substrate in the coating system. On the mirror polished surface was formed a layer similar to the first layer. Measurement of the refractive index of the layer on the Si substrate with an ellipsometer indicated that the layer had a refractive index of 1.77. Measurement of the thickness of that layer with surface profile measuring system revealed that the layer had a thickness of 73 nm (730 Å). Accordingly, the first layer formed on the transparent substrate has a refractive index of 1.77 and a thickness of 73 nm (730 Å).

On the first layer was subsequently formed a second layer (2) by the DC magnetron sputtering method under a 750-W condition using an Nb target, in which method a mixed gas of argon and oxygen (the oxygen concentration was 5.5 parts by volume based on 100 parts by volume of the mixed gas) was introduced so that a pressure in the system at the time of forming the layer becomes 0.666 Pa (5×10⁻³ Torr). In forming the second layer, an Si substrate having a mirror polished surface was placed, in the coating system, together with the transparent substrate on which the first layer had been formed. On the mirror polished surface was formed a layer similar to the second layer. Measurement of the refractive index of the layer on the Si substrate with an ellipsometer indicated that the layer had a refractive index of 2.28. Measurement of the thickness of that layer with surface profile measuring system revealed that the layer had a thickness of 111 nm (1110 Å). Accordingly, the second layer formed on the transparent substrate on which the first layer had been formed has a refractive index of 2.28 and a thickness of 111 nm (1110 Å).

On the second layer was subsequently formed a third layer (3) by the RF magnetron sputtering method under a 500-W condition using an SiO₂ target with adjusting a pressure at the time of forming the layer to be 0.266 Pa (2×10⁻³ Torr) by introducing argon as a coating forming gas. Thus an anti-reflection substrate (4) was formed. In forming the third layer, an Si substrate having a mirror polished surface was placed, in the coating system, together with the transparent substrate on which the second layer had been formed. On the mirror polished surface was formed a layer similar to the third layer. Measurement of the refractive index of the layer on the Si substrate with an ellipsometer indicated that the layer had a refractive index of 1.47. Measurement of the thickness of that layer with surface profile measuring system revealed that the layer had a thickness of 90 nm (900 Å). Accordingly, the third layer formed on the transparent substrate on which the second layer had been formed has a refractive index of 1. 47 and a thickness of 90 nm (900 Å).

The thus formed anti-reflection film (7) was transparent.

Fig. 3 illustrates the reflection spectrum of the surface of the anti-reflection substrate (4) of the anti-reflection film (7).

### Example 3

An anti-reflection substrate (4) was formed in the same manner as Example 2 except for using, as a transparent substrate (5), a transparent polymer film composed of a triacetylcellulose film (the commercial name: FUJITAC SH-80; manufactured by Fuji Photo Film Co., Ltd.) and an about 3 µm thick anti-glaring layer formed, as an acrylic resin base material, on the triacetylcellulose film.

The thus formed anti-reflection film (7) was transparent.

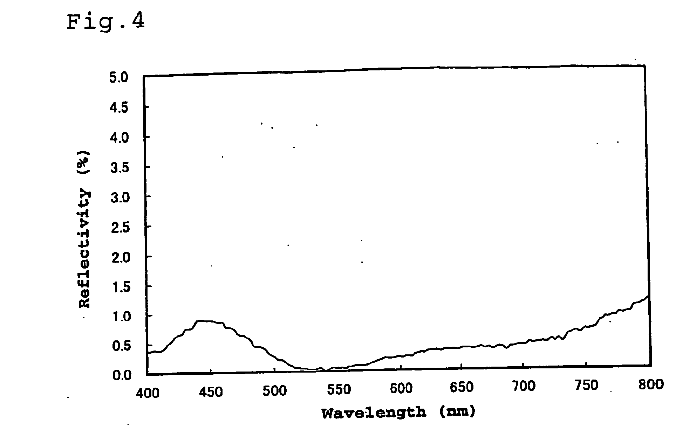

Fig. 4 illustrates the reflection spectrum of the surface of the anti-reflection substrate (4) of the anti-reflection film (7).

### Comparative Example 1

An anti-reflection film is obtained by using, as a transparent substrate, a transparent polymer film composed of a triacetylcellulose film (the commercial name: FUJITAC SH-80; manufactured by Fuji Photo Film Co., Ltd.) and an about 5 µm thick acrylic resin coating formed on the triacetylcellulose film and forming successively, on the substrate, a first layer which was an oxide of Si and Ti and had an atomic ratio, represented by Si/(Si+Ti), of 0.48 [a refractive index: 1.74; a thickness: 50 nm (500 Å)], a second layer formed of Nb₂O₅ [a refractive index: 2.34; a thickness: 125 nm (1250 Å)], and a third layer formed of SiO₂ [a refractive index: 1.47; a thickness: 90 nm (900 Å)].

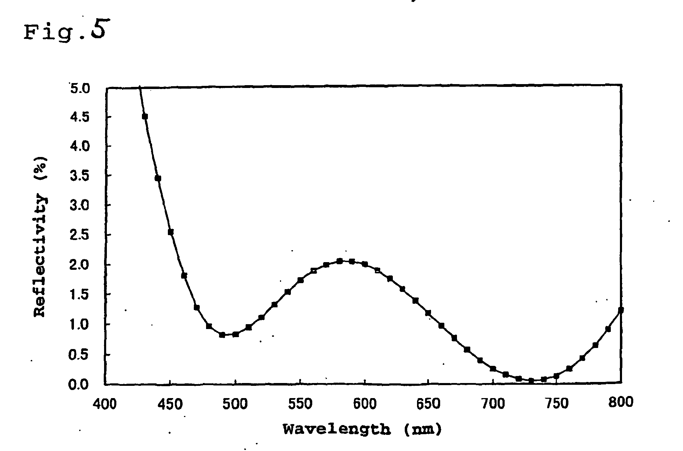

Fig. 5 illustrates the reflection spectrum of the surface of the anti-reflection substrate of the anti-reflection film.

### Comparative Example 2

An anti-reflection film is obtained by using, as a transparent substrate, a transparent polymer film composed of a triacetylcellulose film (the commercial name: FUJITAC SH-80; manufactured by Fuji Photo Film Co., Ltd.) and an about 5 µm thick acrylic resin coating formed on the triacetylcellulose film and forming successively, on the substrate, a first layer which was an oxide of Si and Ti and had an atomic ratio, represented by Si/(Si+Ti), of 0.48 [a refractive index: 1.74; a thickness: 73 nm (730 Å)], a second layer formed of La₂O₃ [a refractive index: 1.90; a thickness: 111 nm (1110 Å)], and a third layer formed of SiO₂ [a refractive index: 1.47; a thickness: 90 nm (900 Å)].

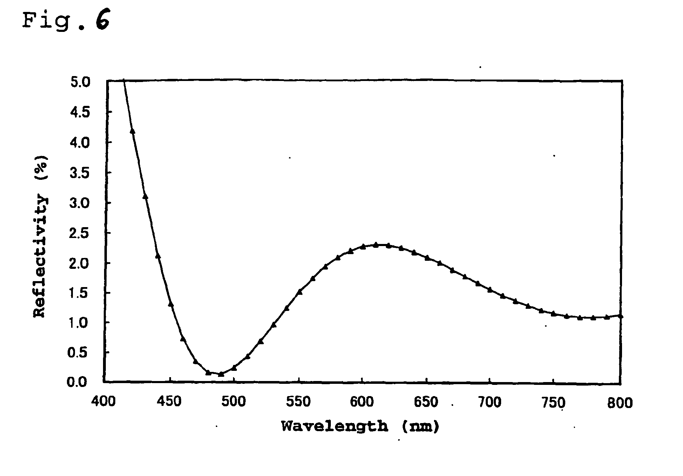

Fig. 6 illustrates the reflection spectrum of the surface of the anti-reflection substrate of the anti-reflection film.

The invention being thus described, it will be obvious that the same may be varied in many ways. Such variations are not to be regarded as a departure from the scope of the invention, and such modifications as would be obvious to one skilled in the art are intended to be included within the scope of the following claims.

## Claims

1. A display device comprising an anti-reflection film (7) comprising a transparent substrate (5), a first layer (1), a second layer (2) and a third layer (3),
the first layer (1) having a refractive index of 1.70 to 1.80 and an optical thickness of 0.21 λ to 0.29 λ, and comprising a mixture of oxides or a compound oxide of at least one kind of element selected from, Si, Al and W and at least one kind of element selected from Bi, Mo, Ta, Zn, Ti, Nb, In, Zr and Sn,
the second layer (2) having a refractive index of not less than 2.20 and an optical thickness of 0.41 λ to 0.54 λ, and comprising an oxide of at least one kind of element selected from Ti and Nb, and
the third layer (3) having a refractive index of 1.44 to 1.49 and an optical thickness of 0.22 λ to 0.27 λ, and comprising an oxide of Si,
wherein the first layer (1), the second layer (2) and the third layer (3) are laminated on a surface of the transparent substrate (5) in this order from the transparent substrate side toward the air layer side (6), and λ is equal to 550 nm.

2. A device according to claim 1 which is a liquid crystal display device.

## Patentansprüche

1. Anzeigevorrichtung, die einen Antireflexionsfilm (7) umfasst, der ein transparentes Substrat (5), eine erste Schicht (1), eine zweite Schicht (2) und eine dritte Schicht (3) umfasst,
wobei die erste Schicht (1) einen Brechungsindex von 1,70 bis 1,80 und eine optische Dicke von 0,21 λ bis 0,29 λ aufweist und ein Gemisch von Oxiden oder ein Mischoxid von mindestens einer Art eines Elements, die aus Si, Al und W ausgewählt ist, und mindestens einer Art eines Elements, die aus Bi, Mo, Ta, Zn, Ti, Nb, In, Zr und Sn ausgewählt ist, umfasst,
die zweite Schicht (2) einen Brechungsindex von nicht weniger als 2,20 und eine optische Dicke von 0,41 λ bis 0,54 λ aufweist und ein Oxid von mindestens einer Art eines Elements, die aus Ti und Nb ausgewählt ist, umfasst, und
die dritte Schicht (3) einen Brechungsindex von 1,44 bis 1,49 und eine optische Dicke von 0,22 λ bis 0,27 λ aufweist und ein Oxid von Si umfasst,
wobei die erste Schicht (1), die zweite Schicht (2) und die dritte Schicht (3) auf einer Oberfläche des transparenten Substrats (5) in dieser Reihenfolge von der Seite des transparenten Substrats zur Luftschichtseite (6) laminiert sind und λ gleich 550 nm ist.

2. Vorrichtung nach Anspruch 1, wobei diese eine Flüssigkristallanzeigevorrichtung ist.

## Revendications

1. Dispositif d'affichage comprenant un film antireflet (7) comprenant un substrat transparent (5), une première couche (1), une deuxième couche (2) et une troisième couche (3),
la première couche (1) ayant un indice de réfraction de 1,70 à 1,80 et une épaisseur optique de 0,21 λ à 0,29 λ, et comprenant un mélange d'oxydes ou un oxyde composé d'au moins un type d'élément choisi parmi Si, Al et W et au moins un type d'élément choisi parmi Bi, Mo, Ta, Zn, Ti, Nb, In, Zr et Sn,
la deuxième couche (2) ayant un indice de réfraction de pas moins de 2,20 et une épaisseur optique de 0,41 λ, à 0,54 λ, et comprenant un oxyde d'au moins un type d'élément choisi parmi Ti et Nb, et
la troisième couche (3) ayant un indice de réfraction de 1,44 à 1,49 et une épaisseur optique de 0,22 λ à 0,27 λ, et comprenant un oxyde de Si,
dans lequel la première couche (1), la deuxième couche (2) et la troisième couche (3) sont stratifiées sur une surface du substrat transparent (5) dans cet ordre depuis le côté du substrat transparent vers le côté de la couche d'air (6), et λ est égal à 550 nm.

2. Dispositif selon la revendication 1, qui est un dispositif d'affichage à cristaux liquides.
